# EUROPEAN PATENT SPECIFICATION

(11) **EP 1 245 155 B1**
(45) Date of publication and mention of the grant of the patent: **02.01.2004**
(21) Application number: 01302838.6
(22) Date of filing: 23.03.2001
(51) Int. Cl.: A22B 5/00

(54) **Apparatus, tool and method for removal of heart and lungs from a carcass**
Apparat,Gerät und Verfahren zum Entnehmen des Herzens und der Lungen von einer Karkasse
Appareil, outil, et procédé pour détacher le coeur et les poumons d'une carcasse

(43) Date of publication of application: 02.10.2002
(73) Proprietor: SLAGTERIERNES FORSKNINGSINSTITUT, DK-4000 Roskilde (DK)
(72) Inventor: Nielsen, Jens Ulrich, 2880 Bagsvaerd (DK); Hansen, Niels Worsoe, 4320 Lejre (DK); Andersen, Kjeld Neve, 2670 Greve Strand (DK)
(74) Representative: Bayliss, Geoffrey Cyril

(56) References cited:
- EP-A- 0 601 812
- EP-A- 0 879 558
- US-A- 5 326 309

## Description

The present invention relates to an apparatus, a tool and a method for removal of heart and lungs from a suspended carcass, which has been cut open in the belly, breast and neck.

After the slaughtering of pigs, the carcasses undergo surface treatment and are cut open in the belly, breast and neck for removal of viscera. Several devices for automatic loosening and removal of certain viscera parts from suspended carcasses have already been described in patents, e.g. Danish Patent DK B1 172.607 (Slagteriemes Forskningsinstitut), EP-A-601 812 and US-A-5 326 309.

The loosening and removal of viscera will preferably be carried out from the bung and downwards in a mixture of manual and mechanized operations. The removal of heart and lungs is done manually and is one of the last operations in the removal of viscera. During the removal operation the heart and lungs can be connected with part of or the entire set of organs (intestines, diaphragm, leaf fat, liver, stomach, etc.). Furthermore, they are connected with trachea and oesophagus, which are still fixed to the carcass. In order to release heart, lungs and other attached organs it is required to loosen trachea and oesophagus from the inside of the neck and to cut them in or near the larynx. The trachea and oesophagus is however difficult to access for manual operations or mechanical tools.

The purpose of the present invention is to provide an apparatus, which is able to completely remove heart and lungs (perhaps together with other attached organs) while trachea and oesophagus are still fixed to the carcass. Preferably, it shall be possible to pull heart and lungs so far out from the carcass that a partial loosening of trachea and oesophagus takes place in the neck area, and trachea and oesophagus are sufficiently extracted from the carcass to enable an operator or a mechanical tool to cut them through, e.g. in the larynx area for complete release of heart, lungs and other attached organs from the carcass.

The apparatus according to the invention is characterized in that it comprises a tool which is designed with two surface parts together forming a mainly V-shaped opening, which at the bottom of the V passes into a slit, the slit being closed or narrowed at the opposite end from the V, and that it has means to move the tool upwards with the V-shaped opening at the top and the slit in a vertical or oblique position.

When the apparatus is moving the tool upwards at the neck area of the carcass with the V-shaped opening at the top, the opening will catch the trachea and the oesophagus immediately behind the heart and lungs, which are hanging out partially from the neck and breast opening in the carcass, and will lead them down into the slit, where they will end up in the closed or narrowed bottom. The surface parts at the slit will then be able to serve as drawplates in contact with parts of the heart and lungs near the trachea and oesophagus when the tool is being pulled away from the carcass, thereby providing a complete extraction of the heart and lungs together with part of the trachea and oesophagus. In a subsequent operation of cutting through the extracted trachea and oesophagus in e.g. the larynx area, the heart and lungs may be completely released from the carcass, so that the organs together with any other attached organs can be placed on a plucks conveyor conveying them to veterinary inspection.

If the tool is turned before the pulling action is done, so that the slit takes up a more oblique or horizontal position, a downward pulling action in the trachea and oesophagus can be exerted to such an extent that the connections in the neck area are efficiently torn apart and the throat area is exposed for an operator or a cutting tool which can release the set of organs by cutting through the trachea and oesophagus. Accordingly, a preferred embodiment of the apparatus of the invention is characterized in that it comprises means to turn the tool after the said upward movement of the tool so that the V-shaped opening is to one side and the slit assumes a more oblique or horizontal position, and to move the tool downwards.

Preferably, the operation of cutting through the trachea and oesophagus is performed mechanically by means of the apparatus of the invention. The apparatus may thus also comprise means to cut through the trachea and oesophagus of the carcass when these have been extracted from the carcass.

The tool of the invention is characterized in that it is designed with two surface parts together forming a mainly V-shaped opening, which at the bottom of the V passes into a slit, the slit being closed or narrowed at the opposite end from the V.

The tool of the invention can be made of plates, bars and/or other pieces having surface parts that can serve to form the V-shaped opening and the slit as well as the narrowing or closure at the bottom of the tool.

Advantageous embodiments of the tool are as follows:

The tool can comprise two plates the adjacent edges of which form a slit, and the plates can be connected with a joint placed at the end of the slit opposite the bottom of the V.

Preferably, the tool comprises two interangular bars forming a V-shaped opening or two plates placed side by side so that the adjacent edges of the plates together form a V-shaped opening, the smallest distance between the bars or the adjacent edges of the plates corresponding to the width of the slit.

The tool can be designed of two plates, the first part of which has edges opposite each other with a mainly invariable distance corresponding to the width of the slit, and a second part of which has edges opposite each other with a decreasing mutual distance in the direction towards the first part, and the plates can be connected with a joint at the end of the slit opposite the second part of the plates.

The plates in the tool can be interangular, preferably forming an angle of between 90° and 150°.

The method according to the invention is characterized in that heart and lungs are loosened from the inside of the carcass and extracted through the breast and neck opening, so that the main part is outside the carcass, that contact surfaces of a tool by an upward movement are placed on the side of the organs that is facing inwards into the carcass, so that the contact surfaces are on either side of the trachea and oesophagus of the carcass, and that the tool is moved away from the carcass to provide a complete extraction of the organs and an extraction of trachea and oesophagus from the carcass.

In the method of the invention a tool can be used which is designed with two surface parts together forming a mainly V-shaped opening, which at the bottom of the V passes into a slit, the slit being closed or narrowed at the opposite end from the V, and the tool can be moved upwards with the V-shaped opening at the top and the slit in a vertical or oblique position. After said upward movement of the tool it can be turned so that the V-shaped opening is to one side and the slit assumes a more oblique or horizontal position, and the tool can be moved downwards.

Preferably, the trachea and oesophagus (7) are subsequently cut through when they have been extracted from the carcass, for complete release of the organs.

The operation of cutting through trachea and oesophagus can be manual or automatic.

In the present carcasses are especially to be understood as pig carcasses, which are suspended by their hind legs and conveyed on a slaughtering line.

The removal of heart and lungs is preferably done after intestines and liver plucks have been completely removed from the carcass and the connection between the liver plucks and the heart plucks has been broken. However, intestines and liver plucks need not be completely removed from the carcass, and the connection to the heart plucks need not be broken either. In one embodiment the liver plucks have for instance been removed from the carcass, but are still connected with the heart plucks in a usual set of plucks.

After the removal operation the trachea and the oesophagus are preferably cut through in or close to the larynx area, and heart, lungs (and perhaps other organs), trachea and oesophagus can then be removed completely from the carcass and suspended on a plucks conveyor.

The invention is explained in further detail in the following with reference to the drawings, wherein
fig. 1 shows an embodiment of a tool according to the invention for removal of heart and lungs from a pig carcass,
fig. 2 shows the first phases in the movements of the tool,
fig. 3 shows the last phases in the movements, and
fig. 4 shows the cutting through of the trachea and the oesophagus of the carcass, while the tool is holding heart and lungs.

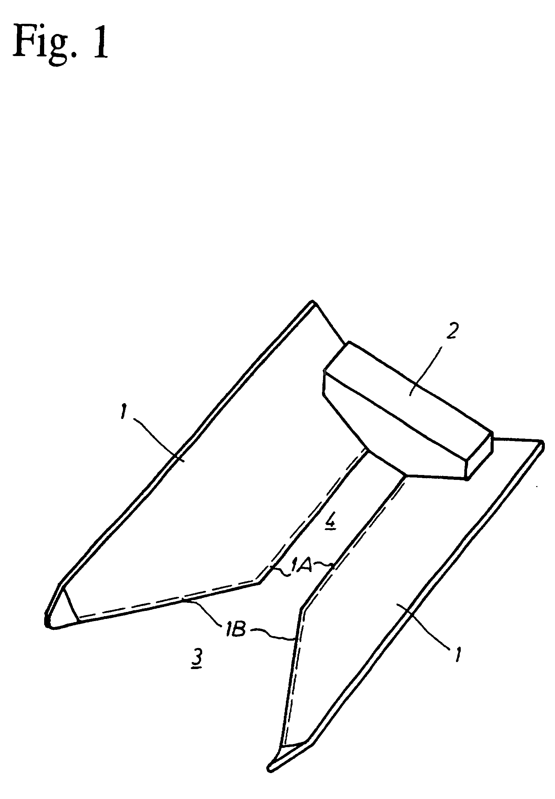

The tool in fig. 1 consists of two plates 1, which are connected to each other by means of a joint 2. The plates form a mutually obtuse angle, and at the end opposite the joint they are cut obliquely so that the edges 1B together form a V-shaped opening 3 with an angle of 90-120°.

The plates are not in contact with each other, but are placed at a distance of 3-5 cm between the closest edges 1A, so that the edges form a slit 4 which at one end is closed by the joint 2 and at the other end joins the bottom of the V.

The tool is mounted in an apparatus for automatic release of heart and lungs from a carcass and can be moved between different positions by means of not shown devices in the apparatus. The movements will appear from the following explanation. The apparatus is placed in a workstation on a slaughter line and is located down-stream from a system that removes intestines and the liver plucks from suspended pig carcasses that have been cut open in the belly, breast and neck.

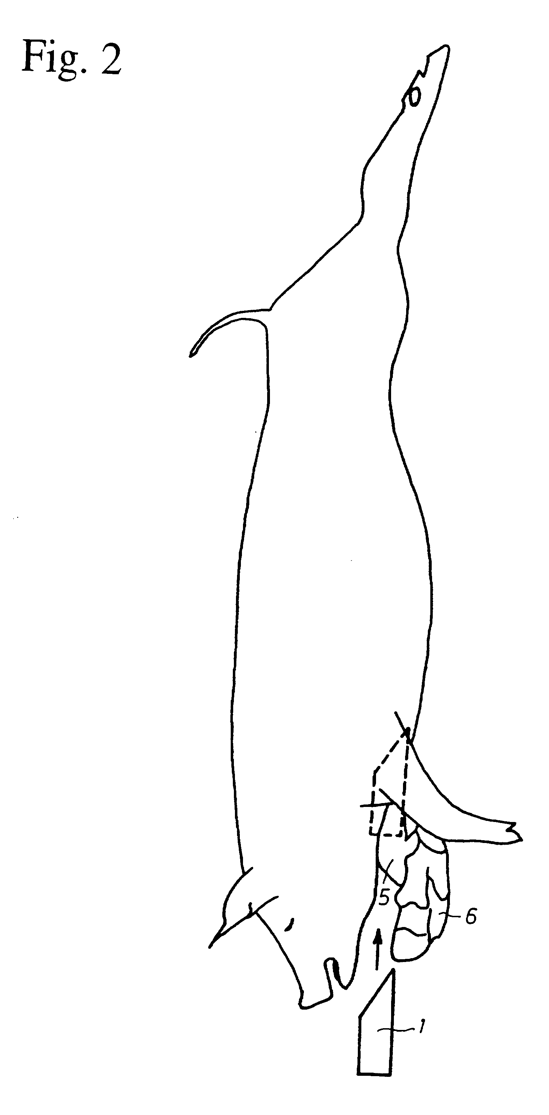

Before the automatic release heart and lungs are loosened from the inside of the carcass, so that the main part of heart 5 and lungs 6 (fig. 2) will hang out through the opening in breast and neck. A suitable machine can be used for the execution of this operation, or the loosening can be performed by an operator who is placed up-stream of the workstation.

In the workstation the forelegs of the carcass are preferably spread and fastened by a fixing device, see e.g. Danish Patent Application PA 1999 01462 (Slagteriernes Forskningsinstitut). By means of suitable mechanical devices the tool of fig. 1 is then led upwards from the initial position shown at the bottom of fig. 2, so that the angular positioned plates 1 move slightly into the opening of the neck. The opening of the V catches heart and lungs and leads trachea and oesophagus down to the bottom of the V. From here the trachea and oesophagus move into the slit 4 of the tool. The tool is pressed a little against the carcass so that the angular positioned plates widen the opening in the neck, and the slit will be moved somewhat into the carcass.

The upward movement of the tool continues a little past the point where trachea and oesophagus are caught at the bottom of the slit by the joint. The tool is stopped at the position shown in fig. 2 by dotted lines.

The upward movement may be a perfectly vertical movement or a vertical movement, which is slightly inclined of up to 25°, e.g. corresponding to the inclination of the underside of the neck. The tool is preferably pressed as far into the carcass as the neck and breast opening allows. The tool can be held vertically during the movement or it can be inclined of up to 25° in one or the other direction, e.g. corresponding to the underside of the neck.

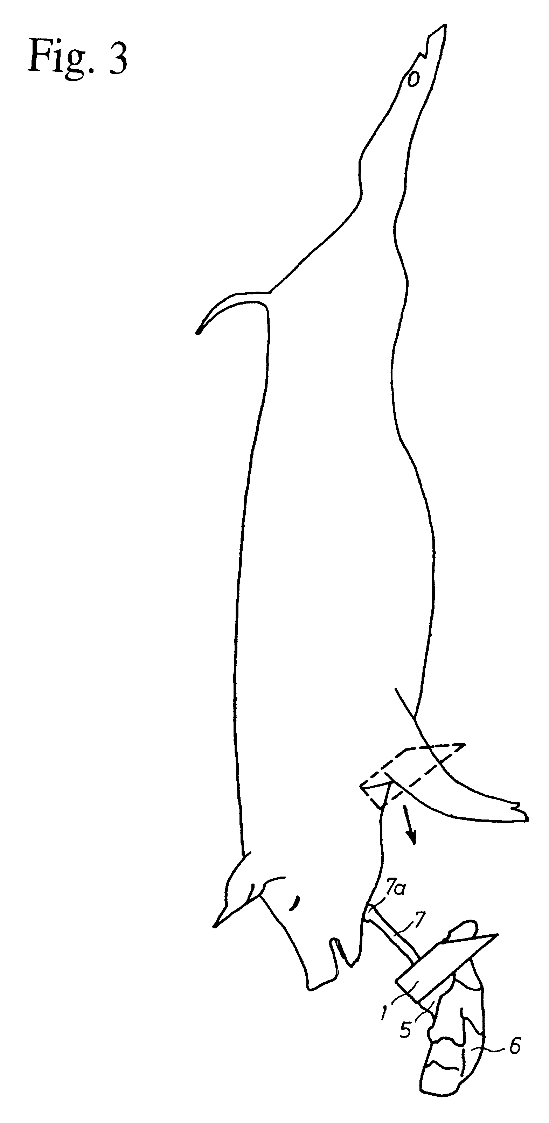

The tool is now located at one side of the heart and lungs, and it is turned 40-120° to the position shown by dotted lines in fig. 3 by means of a not shown device. The angular area between the plates will now be turning obliquely downwards away from the carcass. In this angular position the tool is moved downwards, e.g. obliquely downwards away from the carcass at an angle of 10-50° in proportion to a vertical plane. By this operation the heart and lungs are completely extracted out and away from the carcass, also pulling the nearest end of the trachea and oesophagus 7. Because of the considerable pull in the organs, the connections of the trachea and the oesophagus will break in the neck area, at first at the end closest to the organs and then down along the trachea and oesophagus in the direction of the larynx area 7a. In this way trachea and oesophagus are gradually being pulled free and out from the neck opening until the larynx area is in or slightly outside the neck opening, where it is easily accessible for a cutting operation. The tool is now in the position shown at the bottom of fig. 3, where heart, lungs, trachea and oesophagus have been extracted from the carcass and are mainly only hanging by the throat.

The heart and lungs are completely released by cutting though the trachea and oesophagus, preferably in the larynx or immediately by the larynx on the side closest to the tongue, so that the released heart plucks can be suspended on a usual plucks conveyor with the larynx serving as a stop.

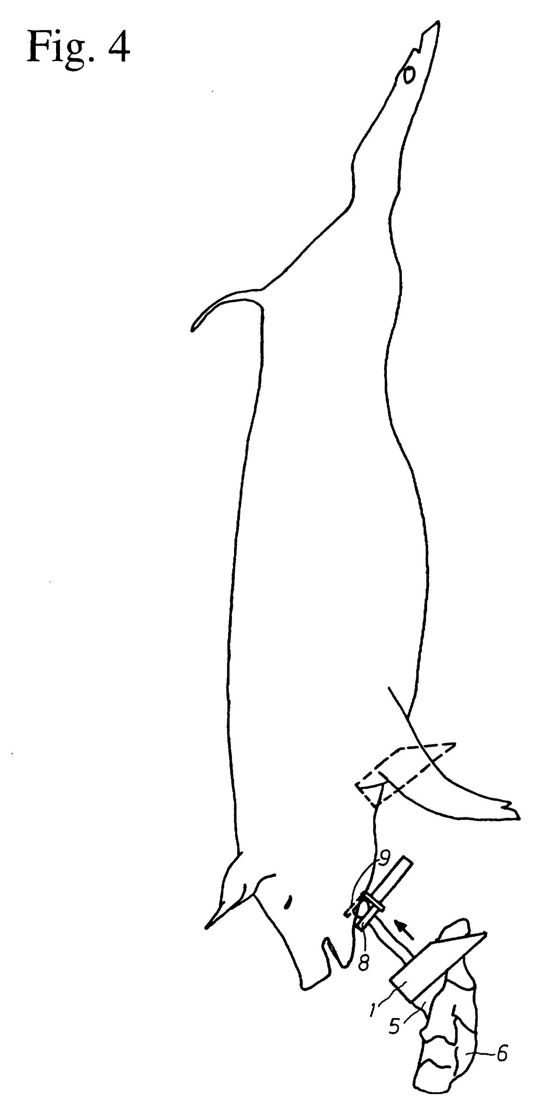

The cutting operation can be performed manually by an operator, but preferably it will be done automatically, as illustrated in fig. 4, in that a cutting tool of the apparatus with a guiding part 8, which encircles a section of the trachea and oesophagus and guides the cutting tool and trachea/oesophagus in relation to each other, is moved along the trachea/oesophagus in the direction from heart and lungs towards the larynx, as indicated by the arrow. The tool comprises a cutting device 9, which in the position shown cuts through the trachea and oesophagus in the larynx area when the guiding part of the tool has caught the larynx. A design of a suitable cutting tool is described in the Danish Patent DK B1 172.778 (Slagteriernes Forskningsinstitut).

The tool or another catching device can transfer the released organs 5, 6 to the plucks conveyor by pulling the trachea and oesophagus out of the slit in the removal tool and leading the end of the throat to the conveyor, which may e.g. have a similar slit for reception of trachea and oesophagus.

If desired, further mechanical work operations can be done to the carcass in the workstation, or the carcass can be guided out from the station for further manual or mechanical treatment.

The movements of the removal tool and the cutting tool are performed by means of mechanical devices in the apparatus of the workstation. The devices can e.g. comprise air cylinders or other driving units. The positions of the removal tool and cutting tool, especially the height, can be adjusted according to the position of anatomical points on the individual carcass. The position may be known from a previous measurement, e.g. measurement of the distance of the forelegs from the gambrel.

## Claims

1. Apparatus for removal of heart (5) and lungs (6) from a suspended carcass which has been cut open in the belly, breast and neck, **characterized in that** the apparatus comprises a tool which is designed with two surface parts (1A, 1B) together forming a mainly V-shaped opening (3), which at the bottom of the V passes into a slit (4), the slit being closed or narrowed at the opposite end from the V, and that it has means to move the tool upwards with the V-shaped opening at the top and the slit in a vertical or oblique position.

2. Apparatus according to claim 1, **characterized in that** it comprises means to turn the tool after the said upward movement of the tool so that the V-shaped opening (3) is to one side and the slit (4) assumes a more oblique or horizontal position, and to move the tool downwards.

3. Apparatus according to claim 1, **characterized in that** it also comprises means (9) to cut through the trachea and oesophagus (7) of the carcass when these have been extracted from the carcass.

4. Tool for removal of heart (5) and lungs (6) from a suspended carcass which has been cut open in the belly, breast and neck, **characterized in that** the tool is designed with two surface parts (1A, 1B) together forming a mainly V-shaped opening (3), which at the bottom of the V passes into a slit (4), the slit being closed or narrowed at the opposite end from the V.

5. Tool according to claim 4, **characterized in that** it comprises two plates (1) the adjacent edges of which form a slit (4), and that the plates (1) are connected with a joint (2) at the end of the slit opposite the bottom of the V.

6. Tool according to claim 4, **characterized in that** it comprises two interangular bars forming a V-shaped opening (3) or two plates (1) placed side by side so that the adjacent edges of the plates together form a V-shaped opening (3), the smallest distance between the bars or the adjacent edges of the plates corresponding to the width of the slit (4).

7. Tool according to claim 4, **characterized in that** it is designed of two plates (1), a first part (1A) of which has edges opposite each other with a mainly invariable distance, corresponding to the width of the slit, and a second part (1B) of which has edges opposite each other with a decreasing mutual distance in the direction towards the first part (1A), and that the plates are connected with a joint (2) placed at the end of the slit opposite the second part (1B) of the plates.

8. Tool according to claim 5, 6 or 7, **characterized in that** the plates (1) are interangular, preferably forming an angle of between 90° and 150°.

9. Method for removal of heart (5) and lungs (6) from a suspended carcass which has been cut open in the belly, breast and neck, **characterized in that** heart and lungs are loosened from the inside of the carcass and extracted through the breast and neck opening, so that the main part is outside the carcass, that contact surfaces (1) of a tool by an upward movement are placed on the side of the organs (5, 6) that is facing inwards into the carcass, so that the contact surfaces (1) are on either side of the trachea and oesophagus (7) of the carcass, and that the tool is moved away from the carcass to provide a complete extraction of the organs and an extraction of trachea and oesophagus from the carcass.

10. Method according to claim 9, **characterized in that** a tool is used which is designed with two surface parts (1A, 1B) together forming a mainly V-shaped opening (3), which at the bottom of the V passes into a slit (4), the slit being closed or narrowed at the opposite end from the V, and that the tool is moved upwards with the V-shaped opening (3) at the top and the slit (4) in a vertical or oblique position.

11. Method according to claim 10, **characterized in that** the tool - after said upward movement of the tool - is turned so that the V-shaped opening (3) is to one side and the slit (4) assumes a more oblique or horizontal position, and that the tool is moved downwards.

12. Method according to claim 9, **characterized in that** subsequently the trachea and oesophagus (7) are cut through when they have been extracted from the carcass.

## Patentansprüche

1. Vorrichtung zum Entfernen von Herz (5) und Lungen (6) aus einem aufgehängten Schlachttierkörper, der an Bauch, Brust und Hals aufgeschnitten ist, **dadurch gekennzeichnet, daß** die Vorrichtung ein Werkzeug umfaßt, das mit zwei Oberflächenteilen (1A, 1B) konstruiert ist, die zusammen eine im wesentlichen V-förmige Öffnung (3) bilden, die am Boden des V in einen Schlitz (4) übergeht, wobei der Schlitz am entgegengesetzten Ende vom V geschlossen oder verengt ist, und daß es Mittel aufweist, um das Werkzeug mit der V-förmigen Öffnung oben und dem Schlitz in einer vertikalen oder geneigten Position nach oben zu bewegen.

2. Vorrichtung nach Anspruch 1, **dadurch gekennzeichnet, daß** sie Mittel umfaßt, um das Werkzeug nach der nach oben gerichteten Bewegung des Werkzeugs zu drehen, so daß die V-förmige Öffnung (3) zu einer Seite liegt und der Schlitz (4) eine geneigtere oder horizontale Position einnimmt, und um das Werkzeug nach unten zu bewegen.

3. Vorrichtung nach Anspruch 1, **dadurch gekennzeichnet, daß** sie auch Mittel (9) umfaßt, um die Luft- und Speiseröhre (7) der Schlachttierkörpers zu durchschneiden, wenn diese aus dem Schlachttierkörper herausgenommen worden sind.

4. Werkzeug zum Entfernen von Herz (5) und Lungen (6) aus einem aufgehängten Schlachttierkörper, der an Bauch, Brust und Hals aufgeschnitten ist, **dadurch gekennzeichnet, daß** das Werkzeug mit zwei Oberflächenteilen (1A, 1B) konstruiert ist, die zusammen eine im wesentlichen V-förmige Öffnung (3) bilden, die am Boden des V in einen Schlitz (4) übergeht, wobei der Schlitz am entgegengesetzten Ende vom V geschlossen oder verengt ist.

5. Werkzeug nach Anspruch 4, **dadurch gekennzeichnet, daß** es zwei Platten (1) umfaßt, deren benachbarte Kanten einen Schlitz (4) bilden, und daß die Platten (1) am Ende des Schlitzes gegenüber dem Boden des V mit einer Verbindung (2) verbunden sind.

6. Werkzeug nach Anspruch 4, **dadurch gekennzeichnet, daß** es zwei im Winkel angeordnete Stangen, die eine V-förmige Öffnung (3) bilden, oder zwei Platten (1), die Seite an Seite angeordnet sind, so daß die benachbarten Kanten der Platten zusammen eine V-förmige Öffnung (3) bilden, umfaßt, wobei der kleinste Abstand zwischen den Stangen oder den benachbarten Kanten der Platten der Breite des Schlitzes (4) entspricht.

7. Werkzeug nach Anspruch 4, **dadurch gekennzeichnet, daß** es aus zwei Platten (1) konstruiert ist, deren erstes Teil (1A) gegenüberliegende Kanten mit einem im wesentlichen unveränderlichen Abstand aufweist, der der Breite des Schlitzes entspricht, und deren zweites Teil (1B) gegenüberliegende Kanten mit einem abnehmenden gegenseitigen Abstand in der Richtung auf das erste Teil (1A) zu aufweist, und daß die Platten mit einer Verbindung (2) verbunden sind, die sich am Ende des Schlitzes gegenüber dem zweiten Teil (1B) der Platten befindet.

8. Werkzeug nach Anspruch 5, 6 oder 7, **dadurch gekennzeichnet, daß** die Platten (1) sich in einem Winkel zueinander befinden, wobei sie bevorzugt einen Winkel von zwischen 90° und 150° bilden.

9. Verfahren zum Entfernen von Herz (5) und Lungen (6) aus einem aufgehängten Schlachttierkörper, der an Bauch, Brust und Hals aufgeschnitten ist, **dadurch gekennzeichnet, daß** Herz und Lungen aus dem Inneren des Schlachttierkörpers gelöst werden und durch die Brust- und Halsöffnung herausgezogen werden, so daß sich der Hauptteil außerhalb des Schlachttierkörpers befindet, daß Kontaktflächen (1) eines Werkzeugs durch eine nach oben gerichtete Bewegung auf der Seite der Organe (5, 6) angeordnet werden, die nach innen in den Schlachttierkörper gerichtet ist, so daß sich die Kontaktflächen (1) zu beiden Seiten der Luft- und Speiseröhre (7) des Schlachttierkörpersbefinden, und daß das Werkzeug vom Schlachttierkörper weg bewegt wird, um für ein vollständiges Herausziehen der Organe und ein Herausziehen von Luft- und Speiseröhre aus dem Schlachttierkörper zu sorgen.

10. Verfahren nach Anspruch 9, **dadurch gekennzeichnet, daß** ein Werkzeug verwendet wird, das mit zwei Oberflächenteilen (1A, 1B) konstruiert ist, die zusammen eine im wesentlichen V-förmige Öffnung (3) bilden, die am Boden des V in einen Schlitz (4) übergeht, wobei der Schlitz am entgegengesetzten Ende vom V geschlossen oder verengt ist, und daß das Werkzeug mit der V-förmigen Öffnung (3) oben und dem Schlitz (4) in einer vertikalen oder geneigten Position nach oben bewegt wird.

11. Verfahren nach Anspruch 10, **dadurch gekennzeichnet, daß** das Werkzeug - nach der nach oben gerichteten Bewegung des Werkzeugs - so gedreht wird, daß die V-förmige Öffnung (3) zu einer Seite liegt und der Schlitz (4) eine geneigtere oder horizontale Position einnimmt, und daß das Werkzeug nach unten bewegt wird.

12. Verfahren nach Anspruch 9 **dadurch gekennzeichnet, daß** die Luft- und Speiseröhre (7) anschließend durchgeschnitten werden, wenn sie aus dem Schlachttierkörper herausgezogen worden sind.

## Revendications

1. Appareil pour détacher le coeur (5) et les poumons (6) d'une carcasse suspendue qui a été ouverte par découpe dans le ventre, le thorax et le cou, **caractérisé en ce que** l'appareil comprend un outil qui est conçu avec deux parties de surface (1A, 1B) formant ensemble une ouverture principalement en forme de V (3) qui, au niveau du fond du V, passe dans une fente (4), la fente étant fermée ou rétrécie à l'extrémité opposée du V, et **en ce qu'**il comporte des moyens pour déplacer l'outil vers le haut avec l'ouverture en forme de V en haut et la fente dans une position verticale ou oblique.

2. Appareil selon la revendication 1, **caractérisé en ce qu'**il comprend des moyens pour tourner l'outil après ledit déplacement vers le haut de l'outil d'une manière telle que l'ouverture en forme de V (3) est sur un côté et la fente (4) prend une position plus oblique ou horizontale et pour déplacer l'outil vers le bas.

3. Appareil selon la revendication 1, **caractérisé en ce qu'**il comprend également des moyens (9) pour découper à travers la trachée et l'oesophage (7) de la carcasse lorsque ceux-ci ont été extraits de la carcasse.

4. Outil pour détacher le coeur (5) et les poumons (6) d'une carcasse suspendue qui a été ouverte par découpe dans le ventre, le thorax et le cou, **caractérisé en ce que** l'outil est conçu avec deux parties de surface (1A, 1B) formant ensemble une ouverture principalement en forme de V (3) qui, au fond du V passe dans une fente (4), la fente étant fermée ou rétrécie à l'extrémité opposée du V.

5. Outil selon la revendication 4, **caractérisé en ce qu'**il comprend deux plaques (1), dont les bords adjacents forment une fente (4), et les plaques (1) sont connectées à un joint (2) à l'extrémité de la fente opposée au fond du V.

6. Outil selon la revendication 4, **caractérisé en ce qu'**il comprend deux barres inter angulaires formant une ouverture en forme de V (3) ou deux plaques (1) placées côte à côte de sorte que les bords adjacents des plaques forment ensemble une ouverture en forme de V (3), la distance la plus petite entre les barres ou les bords adjacents des plaques correspondant à la largeur de la fente (4).

7. Outil selon la revendication 4, **caractérisé en ce qu'**il est pourvu de deux plaques (1), dont une première partie (1A) comporte des bords mutuellement opposés avec une distance principalement invariable, correspondant à la largeur de la fente, et une seconde partie (1B) dont les bords sont mutuellement opposés avec une distance mutuelle décroissante dans la direction vers la première partie (1A), et **en ce que** les plaques sont connectées à un joint (2) placé à l'extrémité de la fente opposée à la seconde partie (1B) des plaques.

8. Outil selon la revendication 5, 6 ou 7, **caractérisé en ce que** les plaques (1) sont inter angulaires, formant de préférence un angle situé entre 90° et 150°.

9. Procédé pour détacher le coeur (5) et les poumons (6) d'une carcasse suspendue qui a été ouverte par découpe dans le ventre, le thorax et le cou, **caractérisé en ce que** le coeur et les poumons sont détachés de l'intérieur de la carcasse et extraits à travers l'ouverture du thorax et du cou, d'une manière telle que la partie principale est à l'extérieur de la carcasse, **en ce que** des surfaces de contact (1) d'un outil par un déplacement vers le haut sont placées sur le côté des organes (5, 6) qui est dirigé vers l'intérieur dans la carcasse, de sorte que les surfaces de contact (1) sont sur chaque côté de la trachée et de l'oesophage (7) de la carcasse, et **en ce que** l'outil est déplacé hors de la carcasse pour assurer une extraction complète des organes et une extraction de la trachée et de l'oesophage de la carcasse.

10. Procédé selon la revendication 9, **caractérisé en ce qu'**un outil est utilisé qui est pourvu de deux parties de surface (1A, 1B) formant ensemble une ouverture principalement en forme de V (3) qui, au fond du V passe dans une fente (4), la fente étant fermée ou rétrécie à l'extrémité opposée du V, et **en ce que** l'outil est déplacé vers le haut avec l'ouverture en forme de V (3) en haut et la fente (4) dans une position verticale ou oblique.

11. Procédé selon la revendication 10, **caractérisé en ce que** l'outil - après ledit déplacement vers le haut de l'outil - est tourné de sorte que l'ouverture en forme de V (3) est sur un côté et la fente (4) prend une position plus oblique ou plus horizontale, et **en ce que** l'outil est déplacé vers le bas.

12. Procédé selon la revendication 9, **caractérisé en ce que**, ultérieurement, la trachée et l'oesophage (7) sont découpés lorsqu'ils ont été extraits de la carcasse.
